# EUROPÄISCHE PATENTSCHRIFT

(11) **EP 2 607 036 B1**
(45) Veröffentlichungstag und Bekanntmachung des Hinweises auf die Patenterteilung: **19.09.2018**
(21) Anmeldenummer: 12198164.1
(22) Anmeldetag: 19.12.2012
(51) Int. Cl.: B28D 1/18, B23Q 9/00, B27C 5/10, B28D 7/02, B23Q 11/00, B23Q 11/06, B28D 7/00, B25H 1/00, B27G 5/04

(54) **Handfräse**
Handheld milling machine
Fraise à main

(30) Priorität: 22.12.2011 DE 102011122459
(43) Veröffentlichungstag der Anmeldung: 26.06.2013
(73) Patentinhaber: Mafell AG, 78727 Oberndorf a.N. (DE)
(72) Erfinder: Haas, Gerd, 72175 Dornhan-Weiden (DE); Schellhammer, Karl, 72172 Sulz-Fischingen (DE); Kiefer, Tobias, 72160 Horb-Talheim (DE)
(74) Vertreter: Manitz Finsterwald Patentanwälte PartmbB

(56) Entgegenhaltungen:
- EP-A1- 1 609 572
- AT-B- 385 713
- DE-A1- 3 612 214
- DE-A1- 4 124 232
- DE-A1- 19 525 892
- US-A- 2 942 633

## Beschreibung

Die vorliegende Erfindung betrifft eine Handfräse gemäß dem Oberbegriff des Anspruchs 1, insbesondere zum Fräsen von Nuten in Verbundbauteile, mit einem, insbesondere eine Grundplatte umfassenden, Grundkörper und einem Maschinenteil, das ein angetriebenes Fräswerkzeug umfasst, wobei der Grundkörper ein feststehendes Gehäuse für das Fräswerkzeug umfasst.

Das Fräsen von Nuten in Verbundbauteile, wie z.B. Gipskartonplatten oder aluminiumbeschichtete Polyethylenplatten, erlangt im Bauwesen zunehmende Bedeutung. Insbesondere können sich an der Rückseite einer Platte vorgesehene V-Nuten so tief in das Plattenmaterial hinein erstrecken, dass die auf der Vorderseite befindliche Beschichtung gerade nicht beschädigt wird. Die unbeschädigte Beschichtung der Vorderseite bildet dann ein Gelenk, welches um eine Wand- oder Pfostenkante herumgeführt werden kann. Dies ist insofern vorteilhaft, als die Platte nicht getrennt werden muss und somit ein glatter Übergang an der Kante vorliegt. Auch aufwändige Spachtelarbeiten werden vermieden.

Beim Fräsen von V-Nuten in Verbundbauteile kann es allerdings schwierig sein, die gewünschte Frästiefe mit der erforderlichen Genauigkeit einzuhalten. Darüber hinaus bereitet das Bearbeiten von unterschiedlich dicken Platten Probleme. Weiterhin ist es in bestimmten Fällen wünschenswert, mitten in der Platte mit dem Fräsen beginnen zu können, was mit gängigen Nutfräsern nicht möglich ist.

Das Maschinenteil mit dem Fräswerkzeug ist beweglich an dem Grundkörper gelagert, um das Fräswerkzeug zum Eintauchen in ein Werkstück zumindest teilweise aus einer Öffnung des Gehäuses herauszubewegen. Insbesondere kann das Maschinenteil einschließlich des Fräswerkzeugs relativ zu dem Grundkörper der Handfräse verschwenkbar sein.

Das Eintauchen des Fräswerkzeugs kann an einer beliebigen Stelle des Werkstücks erfolgen, so dass eine zu fräsende Nut nicht zwingend an einer Werkstückkante beginnen muss. Für eine Veränderung der Frästiefe sind keine umfangreichen Modifikationen an der Maschine vorzunehmen, da diese im Prinzip durch die Eintauchbewegung selbst definiert wird. Im nicht eingetauchten Zustand ist der Benutzer durch das Gehäuse vor dem Fräswerkzeug geschützt. Außerdem wird durch das Gehäuse verhindert, dass Späne oder Staub unkontrolliert in die Umgebung gelangen. Ein derartiger Tauchfräser ermöglicht im Vergleich zu einem Pendelhaubenfräser mit feststehendem Fräswerkzeug eine wesentlich flexiblere und effektivere Bearbeitung von Werkstücken.

Die DE 195 25 892 A1 offenbart eine Handfräse gemäß dem Oberbegriff des Anspruchs 1, insbesondere einen Tauchfräser, dessen Antriebsmotor in einer Konsole der Grundplatte schwenkbar gelagert ist, wobei eine Schutzhaube mit der Grundplatte verbunden ist.

Die in der DE 36 12 214 A1 offenbarte Oberfräse weist einen Parallelanschlag auf, an dessen Unterseite eine Nut für einen Eingriff mit einer Führungsschienen-Rippe vorhanden ist. An der dem Parallelanschlag entgegengesetzten Seite der Maschinengrundplatte ist ein Abstützelement vorgesehen, um bei nur teilweise auf der Führungsschiene aufliegender Grundplatte ein Abkippen des Gerätes zu verhindern. Dieses Abstützelement ist mittels einer Anordnung aus Schraube und Langloch verstellbar. Die EP 1 609 572 A1 offenbart eine Mauernutfräse, bei welcher das Fräswerkzeug durch eine Anordnung aus zwei parallelen Diamanttrennscheiben gebildet ist. Das Gerät wird mit einer unteren Öffnung des Gehäuses an die zu bearbeitende Oberfläche angelegt und anschließend eingetaucht. Zur Abstützung am Untergrund dient der durch die Gehäuseöffnung gebildete Rand.

Es ist eine Aufgabe der Erfindung, eine Handfräse der vorstehend beschriebenen Art derart weiterzubilden, dass bei vielseitiger Einsetzbarkeit insbesondere die Frästiefe exakt eingehalten werden kann und die Flexibilität hinsichtlich unterschiedlicher Frästiefen erweitert wird.

Die Lösung der Aufgabe erfolgt durch eine Handfräse mit den Merkmalen des Anspruchs 1.

Erfindungsgemäß ist das Fräswerkzeug zwischen einer Grundplatte des Grundkörpers und einem außerhalb des Gehäuses vorgesehenen, auf eine Werkstückoberfläche aufsetzbaren Stützelement angeordnet. Das Stützelement dient insbesondere bei einem Aufsetzen der Handfräse auf eine Führungsschiene als führungsschienenferne Abstützung, welche ein Verkippen der Handfräse verhindert. Ein derartiges Verkippen ist bei einer Handfräse im Gegensatz zu einer Handkreissäge problematisch, da beim Nutfräsen die vorgegebene Frästiefe exakt einzuhalten ist, um ein vollständiges Durchtrennen der Platte zu verhindern. Weiterhin besteht bei einer Handfräse aufgrund des relativ hohen Gewichts sowie des weiten Überhängens des Fräswerkzeugs generell eine erhöhte Kippgefahr. Dadurch dass das Stützelement außerhalb des Gehäuses vorgesehen ist, ist es besonders leicht zugänglich, um es z.B. auszutauschen.

Das Stützelement weist eine dem Werkstück zugewandte Gleitfläche auf. Diese Gleitfläche kann mit einer Rundung versehen sein, um ein leichteres Gleiten zu ermöglichen. Vorzugsweise ist die Gleitfläche jedoch zumindest abschnittsweise eben. Dadurch wird verhindert, dass vorhandene Unebenheiten der Werkstückoberfläche auf die Handfräse übertragen werden und zu Variationen in der Frästiefe führen, welche wie vorstehend erwähnt beim Nutfräsen besonders problematisch sind.

Die Gleitfläche des Stützelements ist in Bezug auf eine Auflagefläche der Grundplatte in der Eintauchrichtung gesehen um eine Sicherheitszugabe nach vorn, also nach unten, versetzt, wobei die Sicherheitszugabe bevorzugt zwischen 0,1 mm und 0,5 mm und besonders bevorzugt etwa 0,3 mm beträgt. Dies trägt dem Umstand Rechnung, dass eine zu geringe Frästiefe im Allgemeinen weniger kritisch ist als eine zu große Frästiefe, da bei einer zu großen Frästiefe leicht eine unerwünschte Beschädigung der Bauteilvorderseite auftreten kann. Durch die Sicherheitszugabe werden derartige unerwünschte Beschädigungen der vorderen Beschichtung sicher vermieden.

Weiterbildungen der Erfindung sind in den abhängigen Ansprüchen, der Beschreibung sowie der Zeichnung angegeben.

Ein bevorzugter Aspekt sieht vor, dass zur Begrenzung der Frästiefe ein stufenlos verstellbarer Anschlag für das bewegliche Maschinenteil vorgesehen ist. Der Benutzer ist somit nicht auf bestimmte Platten mit vorgegebener Dicke angewiesen, sondern kann problemlos Platten beliebiger Dicke bearbeiten. Bei konstanter Plattendicke kann hierdurch eine bestimmte Nuttiefe gezielt vorgegeben und sicher eingehalten werden. Die Nuttiefe kann auch beliebig variiert werden.

Als Anschlag kann eine Einstellschraube am Maschinenteil vorgesehen sein, welche mit einer am Grundkörper vorgesehenen Anschlagfläche oder mit einer Werkstückoberfläche zusammenwirkt. Ebenso kann als Anschlag eine Einstellschraube am Grundkörper vorgesehen sein, welche mit einer am Maschinenteil vorgesehenen Anschlagfläche zusammenwirkt. Eine Kombination aus Einstellschraube und Anschlag ermöglicht auf einfache und kostengünstige Weise eine Feineinstellung der Frästiefe. Bei der mit dem Anschlag zusammenwirkenden Einstelleinrichtung muss es sich nicht um die erwähnte Einstellschraube handeln.

Gemäß einem weiteren bevorzugten Aspekt umfasst eine Handfräse eine Sicherheitseinrichtung, welche die Öffnung des Gehäuses bei nicht herausbewegtem Fräswerkzeug gegen ein Eingreifen von außen schützt. Ein derartiger Eingreifschutz kann bei einem erfindungsgemäßen Tauchfräser vor allem dann von Bedeutung sein, wenn das Fräswerkzeug eine beträchtliche Breite aufweist und die Öffnung somit ausreichend groß für die Finger einer Hand ist. Demgegenüber ist die Öffnung bei bekannten Tauchkreissägen so schmal, dass sich ein zusätzlicher Schutz von vornherein erübrigt.

Die Sicherheitseinrichtung kann eine bewegliche Abdeckung für die Öffnung des Gehäuses umfassen, welche insbesondere innerhalb des Gehäuses angeordnet ist. Durch die bewegliche Abdeckung kann die Öffnung des Gehäuses verschlossen werden, wenn sich das Fräswerkzeug im Inneren des Gehäuses befindet. Anstelle der bevorzugten vollständigen Abdeckung der Öffnung des Gehäuses könnte auch eine teilweise Abdeckung vorgesehen sein, beispielsweise in Form eines Schutzgitters.

Die Abdeckung kann weiterhin als eine um eine, insbesondere zu einer Rotationsachse des Fräswerkzeugs koaxiale, Schwenkachse verschwenkbare Pendelschutzhaube ausgeführt sein. Eine derartige Pendelschutzhaube ermöglicht eine zuverlässige Abschirmung des Fräswerkzeugs gegenüber einem Zugriff von außen. Pendelschutzhauben sind in Verbindung mit solchen Handkreissägen und Handfräsen bekannt, welche ein feststehendes Werkzeug aufweisen. Bei derartigen Geräten sind Pendelschutzhauben zum Schutz des Benutzers vor dem offenen Werkzeug zwingend erforderlich. Gemäß dem vorstehend genannten bevorzugten Aspekt wurde erkannt, dass eine derartige Pendelschutzhaube auch in Verbindung mit einem Tauchfräser von Nutzen sein kann, indem nämlich die Pendelschutzhaube einen zuverlässigen Schutz gegen ein Eingreifen in die Öffnung des Gehäuses bietet.

Des Weiteren kann ein Freigabemechanismus zum automatischen Freigeben der Öffnung bei einer Eintauchbewegung des Maschinenteils vorgesehen sein. Die Bedienung der Handfräse wird somit erleichtert, da der Benutzer vor dem Beginn des Fräsens nicht auf ein Freilegen der Öffnung achten muss.

Zum automatischen Freigeben der Öffnung kann die bewegliche Abdeckung mechanisch mit dem beweglichen Maschinenteil gekoppelt sein. Dies ermöglicht einerseits eine zuverlässige Auslösung des Freigabevorgangs bei der Eintauchbewegung und andererseits eine besonders einfache Konstruktion.

Gemäß einer Ausgestaltung der Erfindung sind das Maschinenteil relativ zu dem Grundkörper und die Abdeckung relativ zu dem Maschinenteil verschwenkbar, wobei zur mechanischen Kopplung ein Hebel an jeweiligen Koppelabschnitten des Grundkörpers und der Abdeckung angelenkt ist. Das Maschinenteil und die Abdeckung sind also vorzugsweise um zwei verschiedene, zueinander parallel versetzte Schwenkachsen verschwenkbar. Grundsätzlich können auch andere Kopplungsvarianten eingesetzt werden, beispielsweise eine Zahnradkopplung oder eine Seilkopplung.

Das Stützelement ist vorzugsweise direkt an einer Außenseite des Gehäuses vorgesehen. Dies ermöglicht eine sichere Abstützung ohne große Hebellängen.

Gemäß einer weiteren Ausgestaltung der Erfindung ist das Stützelement in Bezug auf die Grundplatte zwischen einer ersten Stellung, welche einer Verwendung der Handfräse ohne Führungsschiene entspricht, und einer zweiten Stellung, welche einer Verwendung der Handfräse mit einer vorbestimmten Führungsschiene entspricht, verstellbar. In der Praxis ist es nämlich von Bedeutung, wechselweise mit Führungsschiene und ohne Führungsschiene zu arbeiten. Durch das verstellbare Stützelement kann auf einfache Weise die Frästiefe beibehalten werden, wenn von einem Arbeiten ohne Führungsschiene zu einem Arbeiten mit Führungsschiene oder umgekehrt übergegangen wird.
Ein weiterer Aspekt der Erfindung sieht einen mit dem Grundkörper koppelbaren, insbesondere als Parallelanschlag ausgebildeten, Ausleger vor, wobei ein am Ausleger vorgesehenes Führungselement zumindest abschnittsweise eine Querschnittsform aufweist, welche der Querschnittsform einer durch das Fräswerkzeug in einem Werkstück erzeugten Nut entspricht. Vorzugsweise entspricht die Querschnittsform entlang der gesamten Länge des Führungselements der Querschnittsform der durch das Fräswerkzeug erzeugten Nut. Ein derartiger Ausleger kann als Wiederholanschlag verwendet werden, wobei das Führungselement in eine bereits gefräste Nut eingelegt wird und entlang der durch die Nut vorgegebenen Längsrichtung eine weitere Nut gefräst wird, welche zu der ersten Nut exakt parallel ist. Es wird also eine bereits gefräste Nut als Führungsbahn zum Fräsen einer weiteren Nut verwendet. Die sich in der Praxis häufig stellende Aufgabe, eine Anordnung aus mehreren gleichmäßig beabstandeten parallelen Nuten in ein Verbundbauteil zu fräsen, kann durch einen Wiederholanschlag wie vorstehend beschrieben besonders einfach gelöst werden.

Gemäß einem weiteren bevorzugten Aspekt ist das Fräswerkzeug ein um eine Rotationsachse drehend antreibbarer Scheibenfräser, welcher zu einem Fräsen in einer quer zur Rotationsachse verlaufenden Richtung ausgebildet ist. Es wird also ein Umfangsfräser anstatt eines Stirnfräsers eingesetzt. Mit einem Umfangsfräser können besonders exakte und saubere Nuten gefräst werden, da insbesondere ein Ausreißen von Material an der Oberfläche des Verbundbauteils vermieden wird.

Der Scheibenfräser kann einen inneren, zum Anbringen an einem Antriebselement des Maschinenteils ausgebildeten Befestigungsabschnitt und einen äußeren Arbeitsabschnitt umfassen, wobei der Befestigungsabschnitt gegenüber dem Arbeitsabschnitt in einer axialen Richtung vorsteht. Durch das Vorstehen in axialer Richtung kann eine unerwünschte Verlängerung der Antriebswelle vom Motor des Maschinenteils in das Gehäuse hinein vermieden werden. Aufgrund der Breite des Fräswerkzeugs und des dadurch erforderlichen Abstands der Außenseite des Fräswerkzeugs von der Kante einer zugehörigen Führungsschiene besteht im Gegensatz zu einem Sägeblatt einer Handkreissäge eine relativ große Entfernung zwischen dem Fräswerkzeug und dem zugehörigen Antriebsmotor. Diese zusätzliche Entfernung kann in vorteilhafter Weise durch den vorstehenden Abschnitt des Scheibenfräsers selbst überbrückt werden. Bevorzugt ist der vorstehende Abschnitt relativ dünnwandig ausgebildet, so dass er ein geringes Eigengewicht aufweist.

Insbesondere kann der Befestigungsabschnitt gegenüber dem Arbeitsabschnitt um wenigstens 10%, bevorzugt um wenigstens 20%, des Durchmessers des Scheibenfräsers vorstehen. Alternativ oder zusätzlich kann der Befestigungsabschnitt eine größere axiale Länge aufweisen als der Arbeitsabschnitt. Die Entfernung zwischen dem Antriebsmotor des Maschinenteils und dem Arbeitsabschnitt des Fräswerkzeugs kann somit ausreichend überbrückt werden.

Gemäß einer Ausführungsform der Erfindung weist der Befestigungsabschnitt eine napf-, hut-, glocken- oder tellerartige Form auf und ist insbesondere durch eine zentrale Vertiefung in einer Trägerscheibe des Scheibenfräsers gebildet. Dies ermöglicht trotz einer hohen Stabilität und einer großen axialen Länge eine besonders einfache Herstellung.
Insbesondere kann das Fräswerkzeug eine Trägerscheibe und mehrere am Umfang der Trägerscheibe auswechselbar angebrachte Schneidenelemente umfassen. Dies ist insofern vorteilhaft, als dann bei einem fortgeschrittenen Verschleiß des Fräswerkzeugs lediglich die Schneidenelemente ausgetauscht werden müssen, wohingegen die Trägerscheibe an der Maschine verbleiben kann.

Ein bevorzugter Aspekt sieht vor, dass das Gehäuse einen Absaugkanal zum Absaugen von Spänen und/oder Staub aufweist, wobei ein zum lösbaren Koppeln mit dem Absaugkanal ausgebildeter Adapter eine Ausgangsöffnung aufweist, welche gegenüber der Ausgangsöffnung des Absaugkanals verengt oder aufgeweitet ist. Durch den Adapter kann also eine Anpassung erfolgen, wenn sich die Durchmesser des Absaugkanals und eines an den Absaugkanal anzuschließenden Absaugschlauchs unterscheiden. Dieses Problem ist in der Praxis deshalb bedeutsam, da der Absaugkanal zum Absaugen von Spänen und/oder Staub üblicherweise einen relativ großen festgelegten Durchmesser aufweisen muss, um der Gefahr einer Verstopfung vorzubeugen. Gängige Absaugschläuche, welche für unterschiedliche Arten von Bearbeitungsmaschinen erhältlich sind, weisen demgegenüber häufig einen verringerten Durchmesser auf.

Eine vorteilhafte Ausführungsform ist auf eine Handfräse mit einem an eine Saugeinrichtung anschließbaren Schlauch gerichtet, der in die Ausgangsöffnung des Adapters einsteckbar oder einschraubbar ist.

Gemäß einer Ausführungsform der Erfindung ist das Gehäuse wenigstens zweiteilig ausgebildet, wobei ein, bevorzugt eine gesamte Gehäuseseite bildendes, Funktionsteil des Gehäuses, insbesondere eine Haube oder eine Klappe, zwischen einer Schließstellung und einer Öffnungsstellung relativ zu einem feststehenden Gehäuseteil bewegbar ist, in welcher das Innere des Absaugkanals zugänglich ist, um den Adapter in den Absaugkanal einzusetzen oder aus dem Absaugkanal herauszunehmen. Dies ermöglicht ein besonders einfaches und schnelles Austauschen des Adapters.

Vorzugsweise ist das Fräswerkzeug von außen zugänglich, wenn sich das Funktionsteil in der Öffnungsstellung befindet. Das Fräswerkzeug kann dann bei Bedarf leicht, z.B. durch Öffnen der Klappe oder Haube, ausgetauscht werden.

Bevorzugt steht der Adapter in formschlüssigem Eingriff mit dem Absaugkanal, wenn sich das Funktionsteil in der Schließstellung befindet. Der Adapter kann auch bei in der Öffnungsstellung befindlichem Funktionsteil am feststehenden Gehäuseteil verriegelbar sein, insbesondere durch Verdrehen, und die Verriegelung kann durch Verstellen des Funktionsteils in die Schließstellung sicherbar sein. Beispielsweise kann am Funktionsteil des Gehäuses ein Zapfen vorgesehen sein, der im verriegelten Zustand in eine entsprechende Öffnung am Adapter eingreift und so ein Verdrehen und Lösen des Adapters verhindert. Auf diese Weise kann ein versehentliches Lösen des Adapters aus der Verriegelung vermieden werden.

Der Adapter kann insbesondere mit dem Absaugkanal verriegelbar sein, insbesondere mittels einer Bajonett-Verriegelung. Dies ermöglicht ein schnelles und einfaches Ver- und Entriegeln des Adapters.

Eine Ausführungsform ist auf ein System bestehend aus einer Handfräse nach Anspruch 1 und einem Adaptersystem gerichtet, wobei ein Satz von Adaptern wie vorstehend angegeben vorgesehen ist, welche jeweilige Ausgangsöffnungen von unterschiedlicher Größe aufweisen. Jeder Adapter des Satzes deckt eine bestimmte Größe oder einen bestimmten Größenbereich der betreffenden anzupassenden unterschiedlichen Durchmesser ab. Auf diese Weise können insbesondere unterschiedliche Absaugschläuche mit dem jeweiligen fest vorgegebenen Absaugkanal verbunden werden.

Weiterhin ist eine Ausführungsform auf ein System bestehend aus einer Handfräse nach Anspruch 1 und einer Führungsschiene für die Handfräse gerichtet, wobei wenigstens eine mit der Führungsschiene koppelbare Positionierhilfe vorgesehen ist, welche den Abstand des Fräswerkzeugs, insbesondere der Mitte des Fräswerkzeugs, von einer Anschlagkante der Führungsschiene bei an der Führungsschiene angelegter Handfräse anzeigt. Beim Arbeiten mit einer Handkreissäge unter Einsatz einer Führungsschiene ist die Kante der Führungsschiene üblicherweise direkt am Anriss auszurichten. Dieses einfache Vorgehen kann bei einer Handfräse jedoch nicht angewendet werden, da das Fräswerkzeug eine beträchtliche Breite aufweist und zudem die Breite der gefrästen Nut von der Frästiefe abhängt. Beim Ausrichten der Führungsschienenkante am Anriss kommt es also zu einem unerwünschten Versatz zwischen der durch die Mitte des Fräswerkzeugs vorgegebenen Mitte der Nut und dem Anriss. Durch zwei mit der Führungsschiene koppelbare Positionierhilfen kann dieses Problem gelöst werden, indem nicht die Führungsschienenkante, sondern die Zeiger der Positionierhilfen am Anriss ausgerichtet werden - vorzugsweise an zwei möglichst weit auseinander liegenden Stellen. Alternativ kann die Führungsschiene auch an einer ersten Stelle mittels einer Positionierhilfe am Anriss ausgerichtet werden, während die Ausrichtung an einer davon beabstandeten zweiten Stelle mit Hilfe eines Positionszeigers an der Handfräse bewerkstelligt wird.
Vorzugsweise ist die Positionierhilfe als längs der Führungsschiene verschiebbarer Reiter mit einer den Abstand des Fräswerkzeugs von der Anschlagkante der Führungsschiene anzeigenden Markierung ausgebildet. Insbesondere kann der Reiter einfach um den Betrag des Abstands über die Anschlagkante der Führungsschiene überstehen, so dass also die Vorderkante des Reiters selbst die Markierung bildet.
Weiterhin kann die Unterseite des Reiters mit Führungsmerkmalen wie Nuten und/oder Rippen versehen sein, welche mit entsprechenden komplementären Führungsmerkmalen auf der Oberseite der Führungsschiene in Eingriff bringbar sind. Hierdurch kann der Reiter auf besonders einfache Weise entlang der Führungsschiene verschoben werden.

Eine Ausführungsform ist auf ein System mit einer Handfräse nach Anspruch 1 und einer Führungsschiene gerichtet. Nachfolgend wird die Erfindung beispielhaft unter Bezugnahme auf die Zeichnung beschrieben.
- Fig. 1: ist eine vereinfachte, teilweise aufgeschnittene Darstellung einer erfindungsgemäßen Handfräse von vorn.
- Fig. 2: zeigt die Handfräse gemäß Fig. 1 von der Seite.
- Fig. 3: ist eine Teildarstellung der Handfräse gemäß Fig. 1, welche eine Pendelschutzhaube in einem nicht eingetauchten Zustand der Handfräse zeigt.
- Fig. 4: zeigt die Pendelschutzhaube gemäß Fig. 3 in einem eingetauchten Zustand der Handfräse.
- Fig. 5: zeigt einen Ausleger, der mit einem Grundkörper der Handfräse gemäß Fig. 1 gekoppelt ist.
- Fig. 6: zeigt die Handfräse gemäß Fig. 1 in auf eine Führungsschiene aufgesetztem Zustand, wobei eine Positionierhilfe mit der Führungsschiene gekoppelt ist.
- Fig. 7: ist eine Seitenansicht der Positionierhilfe gemäß Fig. 6.
- Fig. 8: ist eine Querschnittsansicht eines Fräswerkzeugs einer Handfräse gemäß einer ersten Ausführungsform der Erfindung.
- Fig. 9: zeigt ein Fräswerkzeug einer Handfräse gemäß einer zweiten Ausführungsform der Erfindung.
- Fig. 10: zeigt ein Fräswerkzeug einer Handfräse gemäß einer dritten Ausführungsform der Erfindung.
- Fig. 11: zeigt ein Fräswerkzeug einer Handfräse gemäß einer vierten Ausführungsform der Erfindung.
- Fig. 12: zeigt einen Absaugkanal der Handfräse gemäß Fig. 1, an welchem mittels eines Adapters ein Absaugschlauch angeschlossen ist.
- Fig. 13: ist eine teilweise aufgeschnittene Darstellung der Anordnung gemäß Fig. 12.

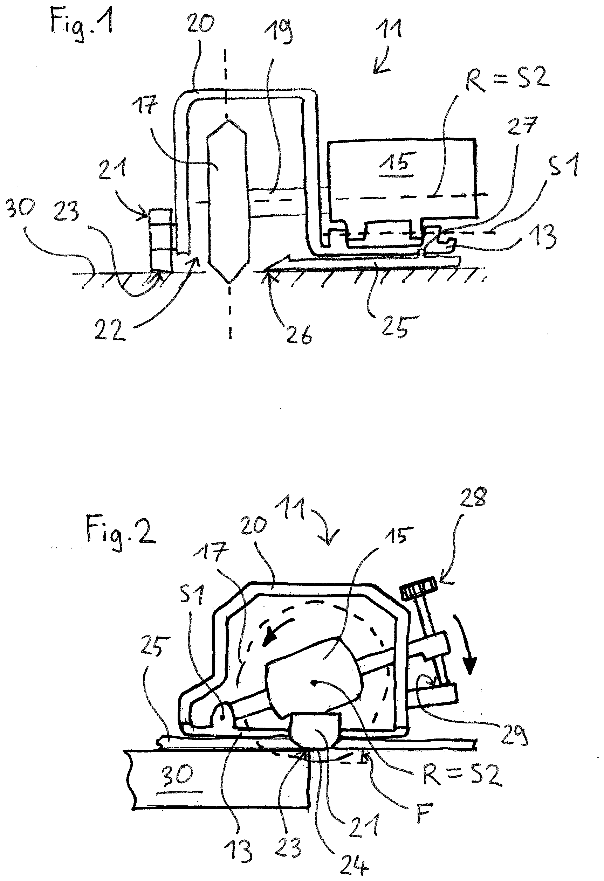

Gemäß Fig. 1 und 2 umfasst eine Handfräse 11 eine Grundplatte 13 und ein Maschinenteil 15, aus welchem eine Welle 19 herausragt. An der Welle 19 ist ein scheibenförmiges Fräswerkzeug 17 befestigt, welches um eine Rotationsachse R drehend antreibbar ist. Ein fest mit der Grundplatte 13 verbundenes Gehäuse 20 umgibt das Fräswerkzeug 17, wobei jedoch über eine untere Öffnung 22 ein Kontakt zwischen dem Fräswerkzeug 17 und einem Werkstück 30 erfolgen kann. An der in Fig. 1 linken Außenseite des Gehäuses 20 ist ein Stützelement 21 vorgesehen, welches eine dem Werkstück 30 zugewandte Gleitfläche 23 aufweist. Die Gleitfläche 23 ist wie in Fig. 2 erkennbar seitlich abgerundet, weist jedoch einem zentralen ebenen Bereich 24 auf. In der Darstellung gemäß Fig. 1 ist die Handfräse 11 mittels der Grundplatte 13 auf einer Führungsschiene 25 aufgesetzt, welche eine vordere Anschlagkante 26 sowie eine an der Oberseite vorgesehene Führungsrippe 27 aufweist. Zum exakten Führen der Handfräse 11 greift die Führungsrippe 27 der Führungsschiene 25 in eine entsprechende Nut der Grundplatte 13 ein. Das Stützelement 21 ist verstellbar an der Außenseite des Gehäuses 20 angebracht, wobei in der in Fig. 1 dargestellten ersten Stellung die untere Gleitfläche 23 gegenüber der Auflagefläche der Grundplatte 13 um die Dicke der Führungsschiene 25 vorsteht, so dass im Ergebnis die Rotationsachse R parallel zur Oberfläche des Werkstücks 30 verläuft. In einer nicht dargestellten zweiten Stellung des Stützelements 21 definiert dessen untere Gleitfläche 23 mit der unteren Auflagefläche der Grundplatte eine gemeinsame Ebene, so dass ein Arbeiten ohne Führungsschiene möglich ist.

Um ein Eintauchen des Fräswerkzeugs 17 an einer beliebigen Stelle des Werkstücks 30 zu ermöglichen, ist das Maschinenteil 15 einschließlich des Fräswerkzeugs 17 um eine erste Schwenkachse S1 (Fig. 2) verschwenkbar an der Grundplatte 13 gelagert. Um einem Benutzer ein bequemes Verschwenken des Maschinenteils 15 zum Eintauchen des Fräswerkzeugs 17 in das Werkstück 30 zu ermöglichen, kann an der Oberseite des Maschinenteils 15 ein Griff vorgesehen sein, der in Fig. 1 und 2 jedoch nicht dargestellt ist. Bei einem Verschwenken des Maschinenteils 15 relativ zu der Grundplatte 13 um die erste Schwenkachse S1 wird das Fräswerkzeug 17 teilweise aus der unteren Öffnung 22 des Gehäuses 20 herausbewegt und dringt bis zu einer vorgegebenen Frästiefe F in das Werkstück 30 ein.

Um diese Frästiefe F einstellen zu können, ist eine Einstellschraube 28 an dem verschwenkbaren Maschinenteil 15 vorgesehen, welche mit einer am Gehäuse 20 vorgesehenen Anschlagfläche 29 zusammenwirkt. Gemeinsam mit der Anschlagfläche 29 bildet die Einstellschraube 28 einen stufenlos verstellbaren Anschlag zum Einstellen der Frästiefe F.

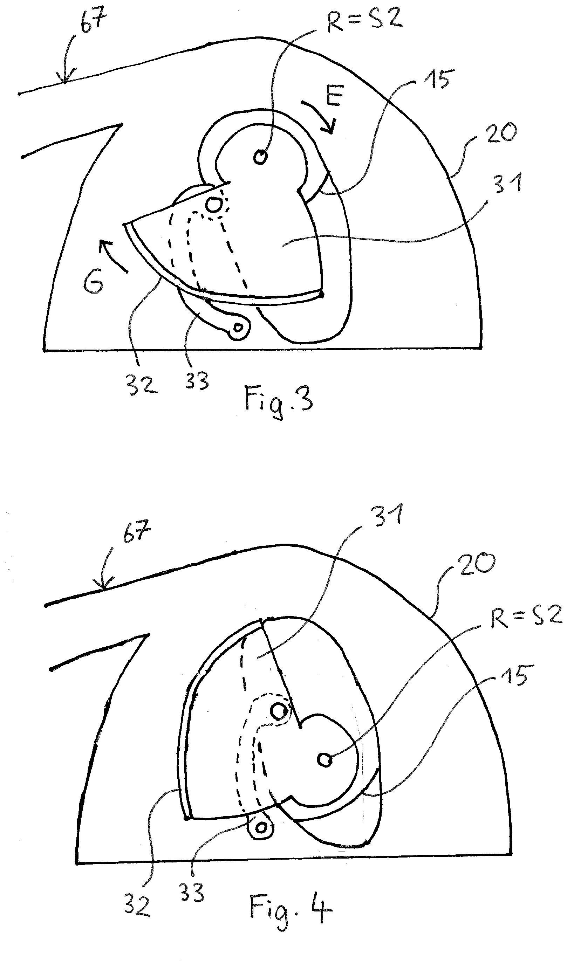

Im nicht eingetauchten Zustand ist das Fräswerkzeug 17 abgesehen von der unteren Öffnung 22 vollständig von dem Gehäuse 20 umgeben und somit ausreichend abgesichert. Um jedoch auch ein Eingreifen eines Benutzers durch die untere Öffnung 22 zu verhindern, ist eine Sicherheitseinrichtung vorgesehen, welche nachfolgend unter Bezugnahme auf die Fig. 3 und 4 beschrieben wird. Zur besseren Verdeutlichung ist in den Fig. 3 und 4 das Fräswerkzeug 17 weggelassen. Als bewegliche Abdeckung für die untere Öffnung 22 des Gehäuses 20 ist eine koaxial zu der Rotationsachse R gelagerte Pendelschutzhaube 31 vorgesehen. Die Pendelschutzhaube 31 ist nach Art eines Kreissektors ausgebildet und weist eine Abdeckleiste 32 auf, welche die gesamte Breite des Fräswerkzeugs 17 überdeckt. Mittels eines Hebels 33 ist die Pendelschutzhaube 31 mechanisch mit dem Gehäuse 20 gekoppelt. Konkret ist der Hebel 33 einerseits an einem unteren Abschnitt des Gehäuses 20 und andererseits an der Pendelschutzhaube 31 angelenkt, so dass bei einem Verschwenken des Maschinenteils 15 um die erste Schwenkachse S1 in einer Eintauchrichtung E ein Verschwenken der Pendelschutzhaube 31 in einer Freigaberichtung G um die Rotationsachse R auftritt. In der in Fig. 4 dargestellten Freigabestellung der Pendelschutzhaube 31 ist die Öffnung 22 des Gehäuses 20 nicht durch die Abdeckleiste 32 der Pendelschutzhaube 31 blockiert, so dass das Fräswerkzeug 17 in das Werkstück 30 (Fig. 1) eintauchen kann. Im Ergebnis wird also die untere Öffnung 22 bei einer Eintauchbewegung des Maschinenteils 15 mittels des Hebels 33 automatisch freigegeben.

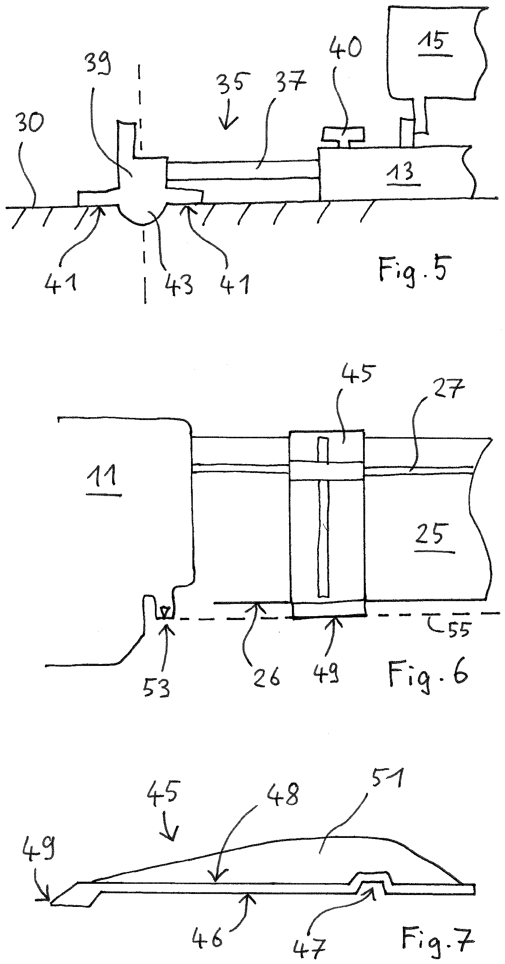

In Fig. 5 ist ein Parallelanschlag in Form eines Auslegers 35 für eine Handfräse 11 dargestellt. Der Ausleger 35 umfasst ein Führungselement 39, welches mittels zweier paralleler Koppelstangen 37 mit der Grundplatte 13 verbindbar ist. Die Koppelstangen 37 sind in geeigneten Führungen der Grundplatte 13 verschiebbar, wobei über Klemmschrauben 40 ein vorgegebener Abstand zwischen dem Führungselement 39 und der Grundplatte 13 festgelegt werden kann. An der Unterseite des Führungselements 39 sind zwei ebene Auflageabschnitte 41 zum Auflegen des Führungselements 39 auf die Oberfläche des Werkstücks 30 vorgesehen, wobei sich zwischen den beiden ebenen Auflageabschnitten 41 ein vorspringender Führungsabschnitt 43 befindet. Dieser Führungsabschnitt 43 weist eine Querschnittsform auf, welche der Querschnittsform einer durch das Fräswerkzeug 17 in dem Werkstück 30 (Fig. 1) erzeugten Nut entspricht. Zum Fräsen von mehreren, parallel verlaufenden Nuten in einem Werkstück 30 fräst ein Benutzer zunächst die erste Nut in gewohnter Weise mittels einer Führungsschiene 25 (Fig. 1). Das Fräsen der weiteren Nuten kann vereinfacht werden, indem anstelle der Führungsschiene 25 der Ausleger 35 als Führungshilfe verwendet wird. Zu diesem Zweck wird der vorspringende Führungsabschnitt 43 in die bereits gefräste Nut eingesetzt und die Anordnung aus Handfräse 11 und Ausleger 35 wird in der gefrästen Nut verschoben. Somit kann insbesondere bei einem gleich bleibenden Nutabstand das lästige Vorsehen von Anrissen sowie das Ausrichten der Führungsschiene an den Anrissen vermieden werden.

In Fig. 6 und 7 ist eine Positionierhilfe in Form eines auf die Führungsschiene 25 aufsetzbaren Reiters 45 dargestellt. Der Reiter 45 weist eine im Wesentlichen ebene Unterseite 46 sowie eine in der Unterseite 46 vorgesehene Nut 47 auf. Die Führungsrippe 27 der Führungsschiene 25 kann in die Nut 47 des Reiters 45 eingreifen, so dass der Reiter 45 bequem entlang der Führungsschiene 25 verschoben werden kann. Um einem Benutzer das Verschieben weiter zu erleichtern, ist an der Oberseite 48 des Reiters 45 ein vorzugsweise längliches Griffelement 51 vorgesehen. Eine über die Anschlagkante 26 der Führungsschiene 25 hinausragende Vorderkante 49 des Reiters 45 wirkt als Markierung, welche den Abstand der Mitte des Fräswerkzeugs 17 von der Anschlagkante 26 bei an der Führungsschiene 25 angelegter Handfräse 11 anzeigt. Weiterhin ist gemäß Fig. 6 an der Grundplatte 13 der Handfräse 11 ein Positionszeiger 53 vorgesehen, welcher die Position der Mitte des Fräswerkzeugs 17 anzeigt. Ein Benutzer kann nun in bequemer Weise eine Nut entlang eines zuvor markierten Anrisses 55 fräsen, indem er die Führungsschiene 25 derart auf das Werkstück 30 auflegt, dass die Vorderkante 49 des Reiters 45 auf den Anriss 55 zeigt. Weiterhin wird die Führungsschiene 25 derart ausgerichtet, dass der Positionszeiger 53 der auf die Führungsschiene 25 aufgesetzten Handfräse 11 ebenfalls auf den Anriss 55 zeigt. Somit ist sichergestellt, dass sich die Mitte des Fräswerkzeugs 17 an der Stelle des Anrisses 55 befindet. Sofern zwei Reiter 45 vorhanden sind, kann die Führungsschiene 25 auch ohne Handfräse 11 korrekt an dem Anriss 55 platziert werden.

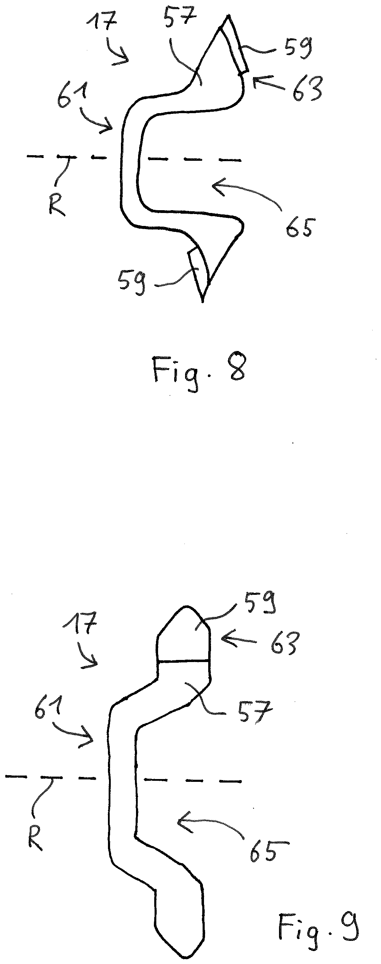

In den Fig. 8 bis 11 sind verschiedene Ausführungsformen eines Fräswerkzeugs 17 im Querschnitt dargestellt. Bei allen dargestellten Ausführungsformen ist das Fräswerkzeug 17 ein um eine Rotationsachse R drehend antreibbarer Scheibenfräser, welcher zu einem Fräsen in einer quer zur Rotationsachse R verlaufenden Richtung ausgebildet ist. Gemäß Fig. 8 ist der Scheibenfräser durch eine Trägerscheibe 57 gebildet, an deren äußerem Umfang mehrere Schneidenelemente 59 auswechselbar angebracht sind. Um das Fräsen einer V-förmigen Nut zu ermöglichen, sind die Schneidenelemente 59 abwechselnd an beiden Flachseiten der Trägerscheibe 57 angebracht. Die Trägerscheibe 57 ist napfartig ausgebildet, wobei ein innerer Befestigungsabschnitt 61, welcher zum Anbringen an der Welle 19 des Maschinenteils 15 ausgebildet ist und zu diesem Zweck mit geeigneten, in Fig. 8 nicht dargestellten Löchern versehen ist, gegenüber einem radial außen befindlichen, die Schneidenelemente 59 tragenden Arbeitsabschnitt 63 in Richtung der Rotationsachse R vorsteht. Der vorspringende Befestigungsabschnitt 61 ist bei der dargestellten Ausführungsform durch eine Vertiefung 65 der Trägerscheibe 57 gebildet. Aufgrund des vorspringenden Befestigungsabschnitts 61 reicht die Welle 19 nicht weit in das Gehäuse 20 hinein und kann daher relativ kurz sein.

Der in Fig. 9 dargestellte Scheibenfräser ist ähnlich gestaltet wie der Scheibenfräser gemäß Fig. 8, wobei sich die Schneidenelemente 59 hier beidseits der Trägerscheibe 57 erstrecken.

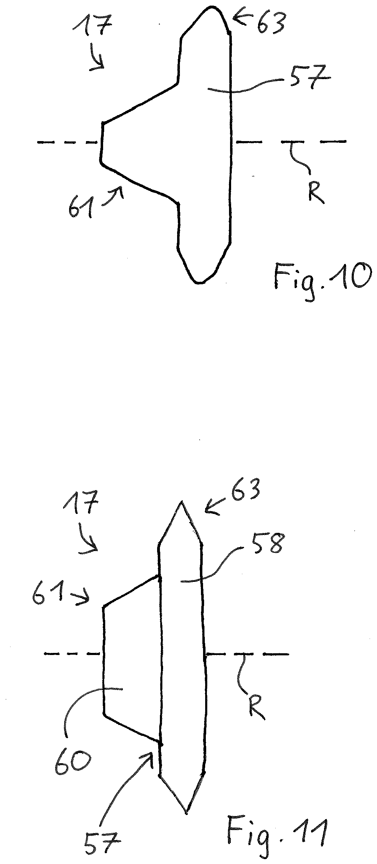

Gemäß der in Fig. 10 dargestellten Ausführungsform eines Scheibenfräser liegt eine massive Trägerscheibe 57 ohne Vertiefung vor. Dies kann für bestimmte Anwendungen vorteilhaft sein.

Fig. 11 zeigt eine weitere Ausführungsform eines Scheibenfräsers, wobei eine relativ schmale Arbeitsscheibe 58 an einem in radialer Richtung kleineren Grundkörper 60 angebracht ist.

Für alle in den Fig. 8-11 dargestellten Fräswerkzeuge gilt, dass die entsprechenden Schneidenelemente auch auf den zugehörigen Grundkörper aufgelötet sein können.

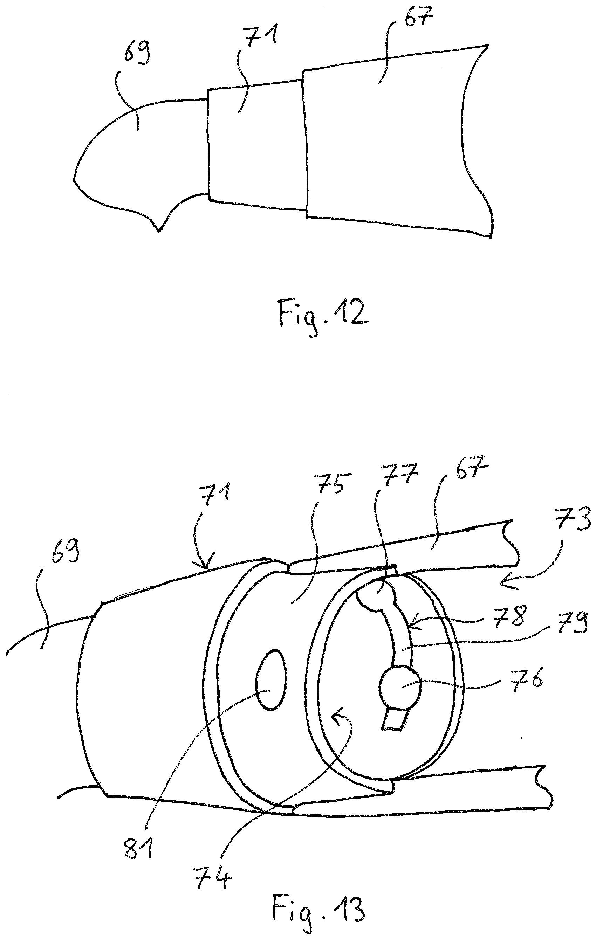

Fig. 12 und 13 zeigen einen durch einen Abschnitt des Gehäuses 20 gebildeten Absaugstutzen 67 zum Absaugen von Spänen und/oder Staub, welcher auch in Fig. 2 und 3 erkennbar ist. An den Absaugstutzen 67 ist ein mit einer externen Saugeinrichtung verbindbarer Schlauch 69 angeschlossen, wobei ein Adapter 71 dafür sorgt, dass der relativ zur Ausgangsöffnung 73 des Absaugstutzens 67 verengte Schlauch 69 auf einfache Weise am Absaugstutzen 67 befestigt werden kann. Zu diesem Zweck weist der Adapter 71 einen Eingangsabschnitt 75 auf, welcher eine Eintrittsöffnung 74 definiert, die an die Ausgangsöffnung 73 des Absaugstutzens 67 angepasst ist.

Der Eingangsabschnitt 75 wird bei Bedarf von der Seite aus in den Absaugstutzen 67 eingelegt, nachdem zuvor eine nicht dargestellte bewegliche Klappe des Gehäuses 20 in eine Öffnungsstellung geschwenkt und dadurch der Absaugstutzen 67 in der Mitte geteilt wurde. Ein im Absaugstutzen 67 vorgesehener pilzkopfförmiger Zapfen 76 greift hierbei in den erweiterten Bereich 77 einer in dem Eingangsabschnitt 75 vorgesehenen schlüssellochförmigen Aussparung 78 ein. Durch Drehen des Adapters 71 in dem Absaugstutzen 67 gelangt der Zapfen 76 in den schmalen Bereich 79 der Aussparung 78, so dass der Adapter 71 in dem Absaugstutzen 67 nach Art eines Bajonett-Verschlusses verriegelt ist. Anschließend wird die bewegliche Klappe des Gehäuses 20 wieder geschlossen, wobei ein von der Klappe abstehender, ebenfalls nicht dargestellter Sicherungsstift formschlüssig in eine Aussparung 81 des Adapters 71 eingreift. Ein unbeabsichtigtes Zurückdrehen und nachfolgendes Lösen des Adapters 71 vom Absaugstutzen 67 wird dadurch verhindert. Sofern mit unterschiedlichen Arten von Schläuchen 69 gearbeitet wird, ist es bevorzugt, der Handfräse 11 einen kompletten Satz von Adaptern 71 für die jeweiligen Schlauchgrößen zuzuordnen. Von Vorteil ist es auch, wenn einem Benutzer ein komplettes System aus einer Handfräse 11, einer dazugehörigen Führungsschiene 25 und einem passenden Satz von Adaptern 71 zur Verfügung gestellt wird.

### Bezugszeichenliste

- 11: Handfräse
- 13: Grundplatte
- 15: Maschinenteil
- 17: Fräswerkzeug
- 19: Welle
- 20: Gehäuse
- 21: Stützelement
- 22: Öffnung
- 23: Gleitfläche
- 24: ebener Bereich
- 25: Führungsschiene
- 26: Anschlagkante
- 27: Führungsrippe
- 28: Einstellschraube
- 29: Anschlagfläche
- 30: Werkstück
- 31: Pendelschutzhaube
- 32: Abdeckleiste
- 33: Hebel
- 35: Ausleger
- 37: Koppelstange
- 39: Führungselement
- 40: Klemmschraube
- 41: Auflageabschnitt
- 43: Führungsabschnitt
- 45: Reiter
- 46: Unterseite
- 47: Nut
- 48: Oberseite
- 49: Vorderkante
- 51: Griffelement
- 53: Positionszeiger
- 55: Anriss
- 57: Trägerscheibe
- 58: Arbeitsscheibe
- 59: Schneidenelement
- 60: Grundkörper
- 61: Befestigungsabschnitt
- 63: Arbeitsabschnitt
- 65: Vertiefung
- 67: Absaugstutzen
- 69: Schlauch
- 71: Adapter
- 73: Ausgangsöffnung
- 74: Eintrittsöffnung
- 75: Eingangsabschnitt
- 76: pilzkopfförmiger Zapfen
- 77: erweiterter Bereich
- 78: Aussparung
- 79: schmaler Bereich
- 81: Aussparung
- R: Rotationsachse
- S1: erste Schwenkachse
- S2: zweite Schwenkachse
- F: Frästiefe
- E: Eintauchrichtung
- G: Freigaberichtung

## Patentansprüche

1. Handfräse (11), insbesondere zum Fräsen von Nuten in Verbundbauteile, mit einem, insbesondere eine Grundplatte umfassenden, Grundkörper (13) und einem Maschinenteil (15), das ein angetriebenes Fräswerkzeug (17) umfasst, wobei der Grundkörper (13) ein feststehendes Gehäuse (20) für das Fräswerkzeug (17) umfasst, wobei das Maschinenteil (15) mit dem Fräswerkzeug (17) beweglich an dem Grundkörper (13) gelagert ist, um das Fräswerkzeug (17) zum Eintauchen in ein Werkstück (30) zumindest teilweise aus einer Öffnung (22) des Gehäuses (20) herauszubewegen,
**dadurch gekennzeichnet, dass**
das Fräswerkzeug (17) zwischen einer Grundplatte (13) des Grundkörpers und einem außerhalb des Gehäuses (20) vorgesehenen, auf eine Werkstückoberfläche aufsetzbaren Stützelement (21) angeordnet ist, wobei das Stützelement (21) eine dem Werkstück zugewandte Gleitfläche (23) aufweist, welche in Bezug auf eine Auflagefläche der Grundplatte (13) in der Eintauchrichtung (E) gesehen um eine Sicherheitszugabe nach vorn versetzt ist.

2. Handfräse nach Anspruch 1,
**dadurch gekennzeichnet, dass**
die Gleitfläche (23) zumindest abschnittsweise eben ist, und/oder dass die Sicherheitszugabe bevorzugt zwischen 0,1 mm und 0,5 mm und besonders bevorzugt etwa 0,3 mm beträgt.

3. Handfräse nach Anspruch 1 oder 2,
**dadurch gekennzeichnet, dass**
das Stützelement (21) direkt an einer Außenseite des Gehäuses (20) vorgesehen ist, und/oder das Stützelement (21) in Bezug auf die Grundplatte (13) zwischen einer ersten Stellung, welche einer Verwendung der Handfräse (11) ohne Führungsschiene (25) entspricht, und einer zweiten Stellung, welche einer Verwendung der Handfräse (11) mit einer vorbestimmten Führungsschiene (25) entspricht, verstellbar ist.

4. Handfräse nach einem der vorhergehenden Ansprüche,
**dadurch gekennzeichnet, dass**
zur Begrenzung der Frästiefe (F) ein stufenlos verstellbarer Anschlag (28, 29) für das bewegliche Maschinenteil (15) vorgesehen ist, wobei insbesondere als Anschlag eine Einstellschraube (28) am Maschinenteil (15) vorgesehen ist, welche mit einer am Grundkörper (13) vorgesehenen Anschlagfläche (29) oder mit einer Werkstückoberfläche zusammenwirkt, oder als Anschlag eine Einstellschraube am Grundkörper vorgesehen ist, welche mit einer am Maschinenteil vorgesehenen Anschlagfläche zusammenwirkt.

5. Handfräse nach einem der vorstehenden Ansprüche,
**gekennzeichnet durch**
eine Sicherheitseinrichtung (31), welche die Öffnung (22) des Gehäuses (20) bei nicht herausbewegtem Fräswerkzeug (17) gegen ein Eingreifen von außen schützt, wobei insbesondere die Sicherheitseinrichtung eine bewegliche Abdeckung (31) für die Öffnung (22) des Gehäuses (20) umfasst, welche insbesondere innerhalb des Gehäuses (20) angeordnet ist, wobei insbesondere die Abdeckung als eine um eine, insbesondere zu einer Rotationsachse (R) des Fräswerkzeugs (17) koaxiale, Schwenkachse (S2) verschwenkbare Pendelschutzhaube (31) ausgeführt ist.

6. Handfräse nach Anspruch 5,
**gekennzeichnet durch**
einen Freigabemechanismus (33) zum automatischen Freigeben der Öffnung (22) bei einer Eintauchbewegung des Maschinenteils (15), wobei insbesondere zum automatischen Freigeben der Öffnung (22) die bewegliche Abdeckung (31) mechanisch mit dem beweglichen Maschinenteil (15) gekoppelt ist, wobei insbesondere das Maschinenteil (15) relativ zu dem Grundkörper (13) und die Abdeckung (31) relativ zu dem Maschinenteil (15) verschwenkbar sind, wobei zur mechanischen Kopplung ein Hebel (33) an jeweiligen Koppelabschnitten des Grundkörpers (13) und der Abdeckung (31) angelenkt ist.

7. Handfräse nach einem der vorstehenden Ansprüche,
**gekennzeichnet durch**
einen mit dem Grundkörper (13) koppelbaren, insbesondere als Parallelanschlag ausgebildeten Ausleger (35), wobei ein am Ausleger (35) vorgesehenes Führungselement (39) zumindest abschnittsweise eine Querschnittsform aufweist, welche der Querschnittsform einer durch das Fräswerkzeug (17) in einem Werkstück (30) erzeugten Nut entspricht.

8. Handfräse nach einem der vorstehenden Ansprüche,
**dadurch gekennzeichnet, dass**
das Fräswerkzeug (17) ein um eine Rotationsachse (R) drehend antreibbarer Scheibenfräser ist, welcher zu einem Fräsen in einer quer zur Rotationsachse (R) verlaufenden Richtung ausgebildet ist, wobei insbesondere der Scheibenfräser einen inneren, zum Anbringen an einem Antriebselement (19) des Maschinenteils (15) ausgebildeten Befestigungsabschnitt (61) und einen äußeren Arbeitsabschnitt (63) umfasst, wobei der Befestigungsabschnitt (61) gegenüber dem Arbeitsabschnitt (63) in einer axialen Richtung vorsteht, wobei insbesondere der Befestigungsabschnitt (61) gegenüber dem Arbeitsabschnitt (63) um wenigstens 10%, bevorzugt um wenigstens 20% des Durchmessers des Scheibenfräsers vorsteht, und/oder der Befestigungsabschnitt (61) eine größere axiale Länge aufweist als der Arbeitsabschnitt (63), und/oder der Befestigungsabschnitt (61) eine napf-, nut-, glocken- oder tellerartige Form aufweist und insbesondere durch eine zentrale Vertiefung (65) in einer Trägerscheibe (57) des Scheibenfräsers gebildet ist, und/oder das Fräswerkzeug (17) eine Trägerscheibe (57) und mehrere am Umfang der Trägerscheibe (57) auswechselbar angebrachte Schneidenlemente (59) umfasst.

9. Handfräse nach einem der vorstehenden Ansprüche,
**dadurch gekennzeichnet, dass**
das Gehäuse (20) einen Absaugkanal (67) zum Absaugen von Spänen und/oder Staub aufweist, wobei ein zum lösbaren Koppeln mit dem Absaugkanal (67) ausgebildeter Adapter (71) eine Ausgangsöffnung aufweist, welche gegenüber der Ausgangsöffnung (73) des Absaugkanals (67) verengt oder aufgeweitet ist.

10. Handfräse nach Anspruch 9,
**gekennzeichnet durch**
einen an eine Saugeinrichtung anschließbaren Schlauch (69), der in die Ausgangsöffnung des Adapters (71) einsteckbar oder einschraubbar ist, und/oder das Gehäuse (20) wenigstens zweiteilig ausgebildet ist, wobei ein, bevorzugt eine gesamte Gehäuseseite bildendes, Funktionsteil des Gehäuses, insbesondere eine Haube oder Klappe, zwischen einer Schließstellung und einer Öffnungsstellung relativ zu einem feststehenden Gehäuseteil bewegbar ist, in welcher das Innere des Absaugkanals (67) zugänglich ist, um den Adapter (71) in den Absaugkanal (67) einzusetzen oder aus dem Absaugkanal (67) herauszunehmen.

11. Handfräse nach Anspruch 10,
**dadurch gekennzeichnet, dass**
das Fräswerkzeug (17) von außen zugänglich ist, wenn sich das Funktionsteil in der Öffnungsstellung befindet, und/oder dass der Adapter (71) bei in der Öffnungsstellung befindlichem Funktionsteil am feststehenden Gehäuseteil verriegelbar, insbesondere durch Verdrehen, und die Verriegelung durch Verstellen des Funktionsteils in die Schließstellung sicherbar ist, und/oder der Adapter (71) in formschlüssigem Eingriff mit dem Absaugkanal (67) steht, wenn sich das Funktionsteil in der Schließstellung befindet, und/oder der Adapter (71) mit dem Absaugkanal (67) verriegelbar ist, insbesondere mittels einer Bajonett-Verriegelung.

12. System bestehend aus einer Handfräse nach einem der vorstehenden Ansprüche und einem Adaptersystem,
**gekennzeichnet durch**
einen Satz von Adaptern (71), die jeweils nach einem der Ansprüche 9 bis 11 ausgebildet sind und welche jeweilige Ausgangsöffnungen von unterschiedlicher Größe aufweisen.

13. System bestehend aus einer Handfräse (11) nach einem der vorstehenden Ansprüche und einer Führungsschiene (25) für die Handfräse,
**gekennzeichnet durch**
wenigstens eine mit der Führungsschiene (25) koppelbare Positionierhilfe (45), welche den Abstand des Fräswerkzeugs (17), insbesondere der Mitte des Fräswerkzeugs, von einer Anschlagkante (26) der Führungsschiene (25) bei an der Führungsschiene angelegter Handfräse (11) anzeigt, wobei insbesondere die Positionierhilfe (45) als längs der Führungsschiene (25) verschiebbarer Reiter mit einer den Abstand des Fräswerkzeugs (17) von der Anschlagkante (26) der Führungsschiene (25) anzeigenden Markierung (49) ausgebildet ist.

14. System mit einer Handfräse (11) nach einem der Ansprüche 1 bis 11 und einer Führungsschiene (25) für die Handfräse.

## Claims

1. A handheld milling machine (11), in particular for milling grooves in composite components, comprising a base body (13), which in particular comprises a base plate, and a machine part (15) which comprises a driven milling tool (17), wherein the base body (13) comprises a fixed-position housing (20) for the milling tool (17); and wherein the machine part (15) comprising the milling tool (17) is movably supported at the base body (13) to at least partly move the milling tool (17) out of an opening (22) of the housing (20) for dipping into a workpiece (30),
**characterized in that**
the milling tool (17) is arranged between a base plate (13) of the base body and a support element (21) which is provided outside the housing (20) and which can be placed onto a workpiece surface, with the support element (21) having a sliding surface (23) which faces the workpiece and which is displaced to the front by an additional safety allowance with respect to a support surface of the base plate (13), viewed in a dipping direction (E).

2. A handheld milling machine in accordance with claim 1,
**characterized in that**
the sliding surface (23) is at least sectionally planar; and/or **in that** the additional safety allowance preferably amounts to between 0.1 mm and 0.5 mm and particularly preferably amounts to approximately 0.3 mm.

3. A handheld milling machine in accordance with claim 1 or claim 2,
**characterized in that**
the support element (21) is provided directly at an outer side of the housing (20); and/or **in that** the support element (21) is adjustable with respect to the base plate (13) between a first position which corresponds to a use of the handheld milling machine (11) without a guide rail (25) and a second position which corresponds to a use of the handheld milling machine (11) with a predefined guide rail (25).

4. A handheld milling machine in accordance with any one of the preceding claims,
**characterized in that**
a continuously adjustable abutment (28, 29) is provided for the movable machine part (15) to bound the milling depth (F), with a setting screw (28) in particular being provided at the machine part (15) as the abutment and cooperating with an abutment surface (29) provided at the base body (13) or with a workpiece surface, or with a setting screw being provided at the base body as the abutment and cooperating with an abutment surface provided at the machine part.

5. A handheld milling machine in accordance with any one of the preceding claims,
**characterized by**
a safety device (31) which protects the opening (22) of the housing (20) against an intervention from the outside when the milling tool (17) is not moved out, with the safety device in particular comprising a movable cover (31) for the opening (22) of the housing (20) which is in particular arranged within the housing (20), with the cover in particular being configured as a pivoting protective hood (31) pivotable about a pivot axis (S2) which is in particular coaxial to an axis of rotation (R) of the milling tool (17).

6. A handheld milling machine in accordance with claim 5,
**characterized by**
a release mechanism (33) for the automatic release of the opening (22) on a dipping movement of the machine part (15), with the movable cover (31) in particular being mechanically coupled to the movable machine part (15) for the automatic release of the opening (22), with the machine part (15) in particular being pivotable relative to the base body (13) and the cover (31) being pivotable relative to the machine part (15), with a lever (33) being pivotally connected to respective coupling sections of the base body (13) and of the cover (31) for the mechanical coupling.

7. A handheld milling machine in accordance with any one of the preceding claims,
**characterized by**
an arm (35) which is couplable to the base body (13) and which is in particular configured as a parallel abutment, with a guide element (39) provided at the arm (35) at least sectionally having a cross-sectional shape which corresponds to the cross-sectional shape of a groove produced in a workpiece (30) by the milling tool (17).

8. A handheld milling machine in accordance with any one of the preceding claims,
**characterized in that**
the milling tool (17) is a side milling cutter which can be rotatingly driven about an axis of rotation (R) and which is configured for a milling in a direction extending transversely to the axis of rotation (R), with the side milling cutter in particular comprising an inner fastening section (61) configured for attachment to a drive element (19) of the machine part (15) and an outer working section (63); with the fastening section (61) projecting in an axial direction with respect to the working section (63); with the fastening section (61) in particular projecting by at least 10%, preferably by at least 20%, of the diameter of the side milling cutter with respect to the working section (63); and/or with the fastening section (61) having a larger axial length than the working section (63); and/or with the fastening section (61) having a cup-like shape, a groove-like shape, a bell-like shape or a plate-like shape and in particular being formed by a central depression (65) in a support disk (57) of the side milling cutter; and/or with the milling tool (17) comprising a support disk (57) and a plurality of cutting elements (59) replaceably attached to the periphery of the support disk (57).

9. A handheld milling machine in accordance with any one of the preceding claims,
**characterized in that**
the housing (20) has a suction passage (67) for sucking off chips and/or dust, with an adapter (71) configured for a releasable coupling to the suction passage (67) having an output opening which is narrowed or widened with respect to the output opening (73) of the suction passage (67).

10. A handheld milling machine in accordance with claim 9,
**characterized by**
a hose (69) which can be connected to a suction device and which can be plugged into or screwed into the output opening of the adapter (71); and/or in that the housing (20) is formed in at least two parts, with a functional part of the housing, in particular a hood or a flap, which preferably forms a total housing side, being movable between a closed position and an open position relative to a fixed-position housing part in which the interior of the suction passage (67) is accessible to insert the adapter (71) into the suction passage (67) or remove it from the suction passage (67).

11. A handheld milling machine in accordance with claim 10,
**characterized in that**
the milling tool (17) is accessible from the outside when the functional part is in the open position; and/or **in that** the adapter (71) can be latched to the fixed-position housing part, in particular by rotation, when the functional part is in the open position and the latching connection can be secured by adjusting the functional part into the closed position; and/or **in that** the adapter (71) is in form-fitted engagement with the suction passage (67) when the functional part is in the closed position; and/or **in that** the adapter (71) can be latched to the suction passage (67), in particular by means of a bayonet latching connection.

12. A system comprising a handheld milling machine in accordance with any one of the preceding claims and an adapter system,
**characterized by**
a set of adapters (71) which are each configured in accordance with any one of the claims 9 to 11 and which have respective output openings of different sizes.

13. A system comprising a handheld milling machine (11) in accordance with any one of the preceding claims and a guide rail (25) for the handheld milling machine,
**characterized by**
at least one positioning aid (45) which is couplable to the guide rail (25) and which displays the spacing of the milling tool (17), in particular of the center of the milling tool, from an abutment edge (26) of the guide rail (25) when the handheld milling machine (11) is placed at the guide rail, with the positioning aid (45) in particular being configured as a slider which is displaceable along the guide rail (25) and which has a marking (49) which displays the spacing of the milling tool (17) from the abutment edge (26) of the guide rail (25).

14. A system comprising a handheld milling machine (11) in accordance with any one of the claims 1 to 11 and a guide rail (25) for the handheld milling machine.

## Revendications

1. Fraiseuse à main (11), en particulier pour fraiser des rainures dans des composants composites, comportant un corps de base (13) pourvu en particulier d'une plaque de base, et une partie de machine (15) qui comprend un outil de fraisage entraîné (17), le corps de base (13) comprenant un boîtier stationnaire (20) pour l'outil de fraisage (17), la partie de machine (15) pourvue de l'outil de fraisage (17) étant montée mobile sur le corps de base (13) pour sortir l'outil de fraisage (17) au moins partiellement hors d'une ouverture (22) du boîtier (20) afin de plonger dans une pièce à oeuvrer (30),
**caractérisée en ce que**
l'outil de fraisage (17) est agencé entre une plaque de base (13) du corps de base et un élément de soutien (21) prévu à l'extérieur du boîtier (20) et susceptible d'être posé sur une surface de la pièce à oeuvrer, l'élément de soutien (21) présentant une surface de glissement (23) tournée vers la pièce à oeuvrer et décalée d'une marge de sécurité vers l'avant par rapport à une surface d'appui de la plaque de base (13), vue en direction de plongée (E).

2. Fraiseuse à main selon la revendication 1,
**caractérisée en ce que**
la surface de glissement (23) est au moins localement plane, et/ou **en ce que** la marge de sécurité est comprise de préférence entre 0,1 mm et 0,5 mm et est de manière particulièrement préférée d'environ 0,3 mm.

3. Fraiseuse à main selon la revendication 1 ou 2,
**caractérisée en ce que**
l'élément de soutien (21) est prévu directement sur une face extérieure du boîtier (20), et/ou l'élément de soutien (21) est réglable par rapport à la plaque de base (13) entre une première position qui correspond à une utilisation de la fraiseuse à main (11) sans rail de guidage (25), et une seconde position qui correspond à une utilisation de la fraiseuse à main (11) avec un rail de guidage prédéterminé (25).

4. Fraiseuse à main selon l'une des revendications précédentes,
**caractérisée en ce que**
pour limiter la profondeur de fraisage (F), il est prévu une butée (28, 29) réglable en continu pour la partie de machine mobile (15), et à titre de butée il est prévu en particulier une vis de réglage (28) sur la partie de machine (15), qui coopère avec une surface de butée (29) prévue sur le corps de base (13) ou avec une surface de la pièce à oeuvrer, ou, à titre de butée, il est prévu une vis de réglage sur le corps de base, qui coopère avec une surface de butée prévue sur la partie de machine.

5. Fraiseuse à main selon l'une des revendications précédentes,
**caractérisée par**
un moyen de sécurité (31) qui protège l'ouverture (22) du boîtier (20) à l'encontre d'une intervention de l'extérieur lorsque l'outil de fraisage (17) n'est pas sorti, et en particulier le moyen de sécurité comprend un recouvrement mobile (31) pour l'ouverture (22) du boîtier (20), qui est agencé en particulier à l'intérieur du boîtier, et en particulier le recouvrement est réalisé sous la forme d'un capot de protection basculant (31) mobile en basculement autour d'un axe de basculement (S2) en particulier coaxial à un axe de rotation (R) de l'outil de fraisage (17).

6. Fraiseuse à main selon la revendication 5,
**caractérisée par**
un mécanisme de libération (33) pour la libération automatique de l'ouverture (22) lors d'un mouvement de plongée de la partie de machine (15), et en particulier, pour la libération automatique de l'ouverture (22), le recouvrement mobile (31) est couplé mécaniquement à la partie de machine mobile (15), et en particulier la partie de machine (15) est mobile en basculement par rapport au corps de base (13) et le recouvrement (31) est mobile en basculement par rapport à la partie de machine (15), et pour le couplage mécanique un levier (33) est articulé sur des portions de couplage respectives du corps de base (13) et du recouvrement (31).

7. Fraiseuse à main selon l'une des revendications précédentes,
**caractérisée par**
un bras (35) susceptible d'être couplé au corps de base (13) et réalisé en particulier sous forme de butée parallèle, un élément de guidage (39) prévu sur le bras (35) présentant au moins localement une forme en section transversale qui correspond à la forme en section transversale d'une rainure générée par l'outil de fraisage (17) dans une pièce à oeuvrer (30).

8. Fraiseuse à main selon l'une des revendications précédentes,
**caractérisée en ce que**
l'outil de fraisage (17) est une fraise à disque susceptible d'être entraînée en rotation autour d'un axe de rotation (R) et réalisée pour un fraisage dans une direction transversale à l'axe de rotation (R), et en particulier la fraise à disque comprend une portion de fixation (61) intérieure réalisée pour le montage sur un élément d'entraînement (19) de la partie de machine (15), et une portion de travail (63) extérieure, la portion de fixation (61) faisant saillie par rapport à la portion de travail (63) dans une direction axiale, et en particulier la portion de fixation (61) fait saillie d'au moins 10 %, de préférence d'au moins 20 % du diamètre de la fraise à disque par rapport à la portion de travail (63), et/ou la portion de fixation (61) présente une longueur axiale supérieure à celle de la portion de travail (63), et/ou la portion de fixation (61) présente une forme de godet, de gorge, de cloche ou d'assiette et est formée en particulier par une cavité centrale (65) dans un disque porteur (57) de la fraise à disque, et/ou l'outil de fraisage (17) comprend un disque porteur (57) et plusieurs éléments formant tranchant (59) montés de façon interchangeable à la périphérie du disque porteur (57).

9. Fraiseuse à main selon l'une des revendications précédentes,
**caractérisée en ce que**
le boîtier (20) présente un canal d'aspiration (67) pour aspirer des copeaux et/ou des poussières, et un adaptateur (71) réalisé pour le couplage détachable avec le canal d'aspiration (67) présente une ouverture de sortie qui est rétrécie ou évasée par rapport à l'ouverture de sortie (73) du canal d'aspiration (67).

10. Fraiseuse à main selon la revendication 9,
**caractérisée par**
un tuyau flexible (69) susceptible d'être raccordé à un moyen d'aspiration et enfichable ou vissable dans l'ouverture de sortie de l'adaptateur (71), et/ou le boîtier (20) est réalisé au moins en deux parties, et une partie fonctionnelle du boîtier, formant de préférence toute une face du boîtier, en particulier un capot ou un clapet, est mobile entre une position de fermeture et une position d'ouverture par rapport à une partie de boîtier stationnaire dans laquelle l'intérieur du canal d'aspiration (67) est accessible pour mettre en place l'adaptateur (71) dans le canal d'aspiration (67) ou pour l'enlever hors du canal d'aspiration (67).

11. Fraiseuse à main selon la revendication 10,
**caractérisée en ce que**
l'outil de fraisage (17) est accessible de l'extérieur lorsque la partie fonctionnelle se trouve dans la position d'ouverture, et/ou **en ce que** l'adaptateur (71) est verrouillable, en particulier par rotation, sur la partie de boîtier stationnaire lorsque la partie fonctionnelle se trouve dans la position d'ouverture, et le verrouillage peut être bloqué par déplacement de la partie fonctionnement jusque dans la position de fermeture, et/ou l'adaptateur (71) est en engagement par coopération de formes avec le canal d'aspiration (67) lorsque la partie fonctionnelle se trouve dans la position de fermeture, et/ou l'adaptateur (71) est verrouillable avec le canal d'aspiration (67), en particulier à l'aide d'un verrouillage à baïonnette.

12. Système constitué par une fraiseuse à main selon l'une des revendications précédentes et par un système adaptateur,
**caractérisé par**
un lot d'adaptateurs (71) réalisés chacun selon l'une des revendications 9 à 11 et présentant chacun des ouvertures de sortie de différentes tailles.

13. Système constitué par une fraiseuse à main (11) selon l'une des revendications précédentes et par un rail de guidage (25) pour la fraiseuse à main,
**caractérisé par**
au moins un accessoire d'aide au positionnement (45) susceptible d'être couplé au rail de guidage (25) et indiquant la distance de l'outil de fraisage (17), en particulier du centre de l'outil de fraisage, par rapport à une arête de butée (26) du rail de guidage (25) lorsque la fraiseuse à main (11) est appliquée contre le rail de guidage, et en particulier l'accessoire d'aide au positionnement (45) est réalisé sous la forme d'un cavalier mobile en translation le long du rail de guidage (25) et comprenant un marquage (49) indiquant la distance de l'outil de fraisage (17) par rapport à l'arête de butée (26) du rail de guidage (25).

14. Système pourvu d'une fraiseuse à main (11) selon l'une des revendications 1 à 11 et d'un rail de guidage (25) pour la fraiseuse à main.
